# EUROPÄISCHE PATENTSCHRIFT

(11) **EP 3 885 253 B1**
(45) Veröffentlichungstag und Bekanntmachung des Hinweises auf die Patenterteilung: **12.02.2025**
(21) Anmeldenummer: 21163992.7
(22) Anmeldetag: 22.03.2021
(51) Int. Cl.: B64C 13/04, G05G 9/047, G01L 5/22

(54) **SOCKELSYSTEM**
PLINTH SYSTEM
SYSTÈME DE PLINTHE

(30) Priorität: 25.03.2020 DE 102020108223
(43) Veröffentlichungstag der Anmeldung: 29.09.2021
(73) Patentinhaber: WITTENSTEIN SE, 97999 Igersheim (DE)
(72) Erfinder: Eck, Alexander, 97268 Kirchheim (DE); Lindner, Andreas, 97947 Grünsfeld (DE); Schnupp, Matthias, 97990 Weikersheim (DE); Prinz, Christoph, 97922 Oberlauda (DE); Michel, Sebastian, 97253 Wolkshausen (DE)
(74) Vertreter: Zimmermann & Partner Patentanwälte mbB

(56) Entgegenhaltungen:
- US-A- 1 798 724
- US-A- 4 811 921
- US-A1- 2013 256 463

## Beschreibung

### Gebiet der Erfindung

Die Offenbarung betrifft ein Sockelsystem für einen Steuerknüppel zur Steuerung eines Flugzeugs, eine Vorrichtung zur Steuerung eines Flugzeugs und ein Verfahren zum Herstellen eines Sockelsystems für einen Steuerknüppel zur Steuerung eines Flugzeugs.

### Stand der Technik

Aus dem Stand der Technik sind Steuerungsvorrichtungen für Flugzeuge bekannt. US 1 798 724 A betrifft eine Flugzeugsteuervorrichtung, umfassend einen vertikalen Steuerstab, welcher in einem Gabelstück befestigt ist.

Bekannte Steuerungsvorrichtungen umfassen einen Steuerknüppel, welcher auf einem Sockel der Steuerungsvorrichtung befestigt ist. Der Steuerknüppel wird beispielsweise verwendet, um Lenksysteme des Flugzeugs zu steuern. Dabei kann ein Pilot insbesondere eine Kraft auf den Steuerknüppel ausüben, beispielsweise eine Kraft in Richtung einer Pitch-Achse oder einer Roll-Achse. Die Krafteinwirkung auf den Steuerknüppel wird in der Steuerungsvorrichtung bestimmt und kann zur Steuerung des Flugzeugs verwendet werden. Der Steuerknüppel kann weitere Steuerungsmöglichkeiten aufweisen, beispielsweise Steuerknöpfe, welche das Bedienen weiterer Funktionen des Flugzeugs am Steuerknüppel erlauben.

Allerdings weisen bekannte Steuerungsvorrichtungen Restriktionen auf, insbesondere in Bezug auf die Ergonomie der Steuerungsvorrichtung oder in Bezug auf die Kompatibilität von Steuerknüppeln und Sockeln.

### Offenbarung der Erfindung

Aufgabe der Offenbarung ist es, Sockelsysteme für einen Steuerknüppel zur Steuerung eines Flugzeugs, anzugeben, welche gegenüber dem Stand der Technik verbessert sind. Insbesondere sollten Sockelsysteme angegeben werden, welche eine verbesserte Ergonomie oder eine höhere Kompatibilität von Steuerknüppeln und Sockeln bereitstellen. Weiterhin ist es Aufgabe der Erfindung, eine Vorrichtung zur Steuerung eines Flugzeugs und Verfahren zum Herstellen eines Sockelsystems anzugeben.

Die Aufgabe wird mit einem Sockelsystem gemäß Anspruch 1 und einem Verfahren gemäß Anspruch 16 sowie einer Vorrichtung nach den nebengeordneten Ansprüchen gelöst. Gemäß einem Aspekt wird ein Sockelsystem für einen Steuerknüppel zur Steuerung eines Flugzeugs gemäß Anspruch 1 angegeben. Ein Sockelsystem für einen Steuerknüppel zur Steuerung eines Flugzeugs umfasst einen Sockelflansch umfassend eine rohrförmige Aufnahme, und eine Sockelmutter, welche die Aufnahme des Sockelflanschs zumindest teilweise umschließt, wobei die Sockelmutter eine Schnittstelle zur Befestigung einer Griffmutter umfasst.

Gemäß einem weiteren Aspekt wird eine Vorrichtung zur Steuerung eines Flugzeugs angegeben, umfassend eine Antriebsvorrichtung, und ein Sockelsystem nach hierin beschriebenen Ausführungsformen, wobei der Sockelflansch des Sockelsystems an der Antriebsvorrichtung befestigt ist.

Gemäß noch einem weiteren Aspekt wird, gemäß Anspruch 16, ein Verfahren zum Herstellen eines Sockelsystems für einen Steuerknüppel zur Steuerung eines Flugzeugs nach hierin beschriebenen Ausführungsformen angegeben, mit Aufschieben einer Sockelmutter über eine rohrförmige Aufnahme eines Sockelflanschs, und Sichern der Sockelmutter an dem Sockelflansch.

Unter "Flugzeug" sind hierin insbesondere Luftfahrzeuge oder Flugzeugsimulatoren zu verstehen. Ein Steuerknüppel (control stick) kann hierin insbesondere zur Verwendung als ein Steuerhebel vor einem Pilotensitz eingerichtet sein (Center Stick) oder zur Verwendung als ein Side Stick, beispielsweise als ein aktiver Side Stick, eingerichtet sein. Der Steuerknüppel kann hierin beispielsweise als "Steuergriff" verstanden werden.

Bei typischen Ausführungsformen ist das Sockelsystem dazu eingerichtet, mit einem Steuerknüppel verbunden zu werden. Bei einem Sockelsystem, welches mit einem Steuerknüppel verbunden ist, kann eine Hochachse des Sockelsystems insbesondere zumindest im Wesentlichen einer Steuerknüppel-Hochachse entsprechen. Hierin sind Ausdrücke wie "axial" oder "radial" insbesondere in Bezug auf die Hochachse des Sockelsystems zu verstehen.

Das Sockelsystem umfasst einen Sockelflansch, welcher insbesondere eingerichtet ist zur Befestigung des Sockelsystems. Der Sockelflansch umfasst eine Sockelbasis, beispielsweise einen Flansch. Die Sockelbasis ist typischerweise eingerichtet zur Befestigung des Sockelflanschs oder des Sockelsystems an einer Antriebsvorrichtung, beispielsweise an einer Antriebsvorrichtung einer Vorrichtung zur Steuerung eines Flugzeugs. Insbesondere kann die Sockelbasis zur Verbindung mit einem Antriebsgehäuse eines Antriebs der Antriebsvorrichtung eingerichtet sein. Bei Ausführungsformen weist die Sockelbasis Basisöffnungen, beispielsweise in einer axialen Richtung ausgebildete Basisöffnungen, zur Befestigung der Sockelbasis an einer Antriebsvorrichtung auf. Die Sockelbasis kann beispielsweise in einem Querschnitt zur Hochachse einen zumindest im Wesentlichen quadratischen Querschnitt oder einen zumindest im Wesentlichen runden Querschnitt aufweisen.

Der Sockelflansch umfasst eine rohrförmige Aufnahme, welche eingerichtet ist zur Aufnahme eines Griffsteckers. Die rohrförmige Aufnahme erstreckt sich entlang der Hochachse des Sockelsystems. Typischerweise weist der Sockelflansch eine durchgängige Öffnung durch die rohrförmige Aufnahme und die Sockelbasis auf.

Bei typischen Ausführungsformen umfasst der Sockelflansch in Richtung des Steuerknüppels mindestens einen Sockel-Vorsprung, insbesondere mindestens zwei Sockel-Vorsprünge, zur Verdrehsicherung einer Griffadapterplatte. Insbesondere ist der mindestens eine Sockel-Vorsprung an der rohrförmigen Aufnahme des Sockelflansches vorgesehen, beispielsweise axial in Richtung des Steuerknüppels. Der mindestens eine Sockel-Vorsprung kann beispielsweise als Nase, als Stift oder als Vorsprung mit einem kreissegmentförmigen Querschnitt zur Hochachse ausgeführt sein.

Die Sockelmutter des Sockelsystems umfasst eine Schnittstelle zur Befestigung einer Griffmutter. Insbesondere ist die Sockelmutter eingerichtet zur Verbindung mit der Griffmutter. Bei typischen Ausführungsformen ist die Schnittstelle der Sockelmutter als ein Außengewinde der Sockelmutter ausgeführt. Insbesondere ist das Außengewinde radial außen an der Sockelmutter ausgeführt. Die Sockelmutter kann radial außen Abflachungen zum Festziehen der Sockelmutter unter Verwendung eines Maulschlüssels aufweisen.

Bei typischen Ausführungsformen ist die Sockelmutter formschlüssig mit dem Sockelflansch verbunden. Typischerweise ist die Sockelmutter drehbar um die rohrförmige Aufnahme des Sockelflanschs an dem Sockelflansch gelagert. Beispielsweise kann die Sockelmutter gleitend an dem Sockelflansch gelagert sein. Typischerweise ist die Sockelmutter an dem Sockelflansch gesichert, insbesondere so gesichert, dass ein Abrutschen der Sockelmutter in Richtung des Steuerknüppels verhindert ist.

Bei Ausführungsformen weist die rohrförmige Aufnahme des Sockelflanschs in Umfangsrichtung eine Nut auf, wobei Sicherungssegmente des Sockelsystems teilweise in der Nut angeordnet sind und für die Sockelmutter einen Anschlag in Richtung des Steuerknüppels bilden. Insbesondere sichern die Sicherungssegmente die Sockelmutter gegen ein Abrutschen der Sockelmutter in Richtung des Steuerknüppels. Typischerweise ist die Nut radial außen an der rohrförmigen Aufnahme ausgeführt. Die Nut kann insbesondere als Ringnut um die rohrförmige Aufnahme ausgeführt sein. Die Sicherungssegmente können einen Anschlag für die Sockelmutter in axialer Richtung bilden. Bei Ausführungsformen können die Sicherungssegmente für eine Griffmutter einen weiteren Anschlag in Richtung der Sockelbasis bilden. Insbesondere kann die Sockelmutter an der rohrförmigen Aufnahme des Sockelflansches und an den Sicherungssegmenten gelagert sein, beispielsweise gleitend gelagert sein.

Typischerweise sind die Sicherungssegmente als geteilter Sicherungsring ausgeführt. In Ausführungsformen weisen die Sicherungssegmente eine Sicherungssegment-Verdrehsicherung auf, insbesondere mindestens einen axial ausgeführten Stift oder eine axial ausgeführte Nase. In Ausführungsformen kann die Sicherungssegment-Verdrehsicherung die Sicherungssegmente gegen ein Verdrehen gegenüber dem Sockelflansch sichern. In weiteren Ausführungsformen kann die Sicherungssegment-Verdrehsicherung die Sicherungssegmente gegen ein Verdrehen gegenüber der Sockelmutter oder der Griffmutter sichern.

Bei Ausführungsformen kann die Sockelmutter eine Sockelmutternut aufweisen. Die Sockelmutternut ist typischerweise eingerichtet zur Aufnahme eines Sicherungsdrahts. Die Sockelmutternut kann beispielsweise radial außen an der Sockelmutter angeordnet sein. In Ausführungsformen weist die Sockelmutter Befestigungsöffnungen zur Befestigung des Sicherungsdrahts auf, beispielsweise Befestigungsöffnungen in Umfangsrichtung um die Hochachse. Der Sicherungsdraht dient insbesondere der zusätzlichen Sicherung von Sockelmutter und Griffmutter zueinander.

Bei typischen Ausführungsformen umfasst das Sockelsystem einen Griffstecker, welcher zumindest teilweise in der rohrförmigen Aufnahme des Sockelflanschs aufgenommen ist und einen radial auskragenden Steckerflansch aufweist. Typischerweise weist der Steckerflansch an der dem Steuerknüppel zugewandten Seite des Steckerflansches mindestens ein Stecker-Verdrehsicherungselement zur Verdrehsicherung des Griffsteckers gegenüber einer Griffadapterplatte auf. Das Stecker-Verdrehsicherungselement kann insbesondere mindestens eine Nase oder mindestens eine Vertiefung umfassen. Typischerweise liegt der Steckerflansch des Griffsteckers auf einer ersten axialen Sockelflansch-Stirnfläche des Sockelflanschs auf. Die erste axiale Sockelflansch-Stirnfläche bildet insbesondere einen axialen Anschlag für den Griffstecker. Die erste axiale Sockelflansch-Stirnfläche und eine zweite axiale Sockelflansch-Stirnfläche können in radialer Richtung eine Stufe ausbilden. Insbesondere ist die zweite axiale Sockelflansch-Stirnfläche radial außerhalb der ersten axialen Sockelflansch-Stirnfläche ausgeführt. Zum Beispiel kann der Steckerflansch in axialer Richtung auf der ersten axialen Sockelflansch-Stirnfläche aufliegen. Der Steckerflansch kann in Richtung des Steuerknüppels axial zumindest im Wesentlichen bündig mit der zweiten axialen Sockelflansch-Stirnfläche des Sockelflanschs ausgeführt sein. Die Stufe kann radial so angeordnet sein, dass der Griffstecker, insbesondere der Steckerflansch in radialer Richtung ein Spiel aufweist.

Der Griffstecker weist typischerweise elektrische Kontakte auf. Die elektrischen Kontakte sind eingerichtet zur Kontaktierung weiterer elektrischer Kontakte des Steuerknüppels. Die weiteren elektrischen Kontakte des Steuerknüppels können beispielsweise mit weiteren Steuerungselementen des Steuerknüppels verbunden sein, beispielsweise mit einem Steuerknopf, einem Steuerschalter oder einem Abzug. Der Griffstecker kann weitere elektrische Verbindungskontakte aufweisen, beispielsweise zur Verbindung des Griffsteckers über Kabel mit einer Steuereinrichtung eines Flugzeugs.

Bei Ausführungsformen umfasst das Sockelsystem eine Griffadapterplatte, welche zur Anordnung zwischen dem Sockelflansch und dem Steuerknüppel eingerichtet ist, wobei die Griffadapterplatte an einer dem Steuerknüppel zugewandten, ersten Adapterseite der Griffadapterplatte mindestens eine Griffausrichtungsnase zur Verdrehsicherung des Steuerknüppels gegenüber der Griffadapterplatte und dem Sockelflansch umfasst. Typischerweise umgreift die Griffadapterplatte zumindest teilweise den Griffstecker. Beispielsweise ist die Griffadapterplatte zumindest im Wesentlichen ringförmig ausgeführt.

Bei typischen Ausführungsformen weist die Griffadapterplatte zur Verdrehsicherung gegenüber dem Sockelflansch mindestens eine Ausnehmung auf, insbesondere zum Eingriff mit mindestens einem Sockel-Vorsprung des Sockelflanschs. Die mindestens eine Ausnehmung kann beispielsweise radial außen ausgeführt sein. Die mindestens eine Ausnehmung kann passend zu dem mindestens einen Sockel-Vorsprung ausgeführt sein. Zum Beispiel kann die Ausnehmung radial außen einen geraden Abschnitt aufweist, welche insbesondere zu einem Sockel-Vorsprung passt, wobei der Sockel-Vorsprung beispielsweise im Querschnitt zur Hochachse einen kreissegmentförmigen Querschnitt aufweist.

Die Griffadapterplatte kann auf einer zweiten axialen Sockelflansch-Stirnfläche des Sockelflansches aufliegen. In Ausführungsformen kann die erste axiale Sockelflansch-Stirnfläche, auf welcher beispielsweise der Griffstecker aufliegt, radial innerhalb der zweiten axialen Sockelflansch-Stirnfläche ausgeführt sein. Die erste axiale Sockelflansch-Stirnfläche und zweite axiale Sockelflansch-Stirnfläche können axial versetzt ausgeführt sein und beispielsweise in radialer Richtung eine Stufe ausbilden.

Bei typischen Ausführungsformen umfasst die Griffadapterplatte an einer dem Sockelflansch zugewandten, zweiten Adapterseite der Griffadapterplatte mindestens ein Adapter-Verdrehsicherungselement zur Verdrehsicherung des Griffsteckers gegenüber dem Sockelflansch. Insbesondere kann das Adapter-Verdrehsicherungselement zumindest im Wesentlichen passend für einen Eingriff mit dem Stecker-Verdrehsicherungselement ausgeführt sein. Das Adapter-Verdrehsicherungselement kann beispielsweise mindestens eine Nase oder mindestens eine Vertiefung umfassen.

Typischerweise ist die Griffadapterplatte Steuerknüppel-spezifisch ausgeführt. Insbesondere kann die Griffadapterplatte für einen spezifischen Typ eines Steuerknüppels hergestellt sein. Beispielsweise kann eine Griffausrichtungsnase Steuerknüppel-spezifisch angeordnet sein, beispielsweise in Umfangsrichtung um die Hochachse Steuerknüppel-spezifisch angeordnet sein. Bei typischen Ausführungsformen kann die Griffadapterplatte eine Ausrichtung des Steuerknüppels festlegen, insbesondere eine Ausrichtung um die Hochachse. Die Ausrichtung des Steuerknüppels kann sich hierin insbesondere auf eine Null-Ausrichtung oder Ausgangs-Ausrichtung beziehen, beispielsweise bei Ausführungsformen, bei welchen der Steuerknüppel um die Hochachse drehbar ausgeführt ist. Beispielsweise kann die Ausrichtung des Steuerknüppels in einem Winkelbereich um die Hochachse von mindestens 5 Grad, insbesondere von mindestens 10 Grad oder mindestens 20 Grad, oder von maximal 60 Grad, insbesondere maximal 50 Grad oder maximal 40 Grad, anpassbar sein, beispielsweise in einem Winkelbereich von 30 Grad.

Bei Ausführungsformen ist eine Ausrichtung des Griffsteckers an die Ausrichtung des Steuerknüppels angepasst, beispielsweise durch die Anordnung des Adapter-Verdrehsicherungselements des Griffadapters in Umfangsrichtung um die Hochachse. Bei Ausführungsformen kann zum Beispiel die Ausrichtung des Steuerknüppels Flugzeug-spezifisch oder Cockpit-spezifisch angepasst werden. Ein Vorteil von hierin beschriebenen Ausführungsformen kann sein, dass die Ergonomie verbessert wird, insbesondere bei einer Verwendung des Sockelsystems mit einem Side Stick.

Bei typischen Ausführungsformen umfasst das Sockelsystem eine Griffmutter mit einer Befestigungs-Schnittstelle zur Befestigung der Griffmutter an der Sockelmutter, insbesondere zum Verbinden der Befestigungs-Schnittstelle der Griffmutter mit der Schnittstelle der Sockelmutter. Insbesondere ist die Befestigungs-Schnittstelle der Griffmutter radial innen an der Griffmutter ausgeführt. Typischerweise ist die Befestigungs-Schnittstelle der Griffmutter als Befestigungs-Innengewinde ausgeführt. Die Griffmutter kann radial außen Abflachungen zum Festziehen der Griffmutter unter Verwendung eines Maulschlüssels aufweisen.

Bei typischen Ausführungsformen umfasst die Griffmutter eine Griff-Schnittstelle zur Befestigung des Steuerknüppels an der Griffmutter. Typischerweise ist die Griff-Schnittstelle als Griff-Innengewinde ausgeführt, insbesondere radial innen an der Griffmutter. Typischerweise weist das Befestigungs-Innengewinde eine entgegengesetzte Gewinderichtung, beispielsweise Linksgewinde oder Rechtsgewinde, zu dem Griff-Innengewinde auf. Typischerweise ist die Griff-Schnittstelle bezüglich der Befestigungs-Schnittstelle axial in Richtung des Steuerknüppels angeordnet.

Bei weiteren typischen Ausführungsformen kann die Griff-Schnittstelle als Teil eines Bajonett-Anschlusses zur Verbindung mit einem Steuerknüppel oder als Teil einer Kniehebel-Verriegelung zur Verbindung mit einem Steuerknüppel oder als Griffmutter-Außengewinde für eine Überwurfmutter zur Befestigung eines Steuerknüppel ausgebildet sein.

Bei Ausführungsformen ist die Griffmutter, insbesondere die Griff-Schnittstelle, Steuerknüppel-spezifisch ausgeführt. Insbesondere kann ein Griff-Innengewinde zur Verbindung des Sockelsystems mit einem Steuerknüppel an ein Steuerknüppel-Außengewinde angepasst sein. Beispielsweise kann das Griff-Innengewinde an einen Gewindedurchmesser, an einen Gewindetyp oder an eine Gewindelänge des Steuerknüppel-Außengewindes angepasst sein. Bei typischen Ausführungsformen ist das Sockelsystem durch Anpassung der Griffmutter und der Griff-Adapterplatte zur Verwendung mit unterschiedlichen Typen von Steuerknüppeln eingerichtet.

Typischerweise ist die Schnittstelle der Sockelmutter mit der Befestigungs-Schnittstelle der Griffmutter verbunden, wobei die Griffmutter und die Sockelmutter gemeinsam drehbar um die rohrförmige Aufnahme des Sockelflanschs gelagert sind. Insbesondere ist ein Außengewinde der Sockelmutter mit dem Befestigungs-Innengewinde der Griffmutter verschraubt. Typischerweise sind die miteinander verbundenen Sockelmutter und Griffmutter gemeinsam drehbar um die rohrförmige Aufnahme des Sockelflansches gelagert. Insbesondere sind die Sockelmutter und die Griffmutter an der rohrförmigen Aufnahme und an Sicherungssegmenten des Sockelsystems drehbar gelagert. Beispielsweise sind die Sockelmutter und die Griffmutter gleitend gelagert.

Bei typischen Ausführungsformen ist das Sockelsystem eingerichtet zur Verbindung mit einem Steuerknüppel, insbesondere durch Anschrauben eines Griff-Innengewindes der Griffmutter an ein Steuerknüppel-Außengewinde des Steuerknüppels, beispielsweise durch gemeinsames Drehen der miteinander verschraubten Sockelmutter und Griffmutter. Bei einem Anschrauben des Steuerknüppels an dem Sockelsystem können sich die miteinander verbundenen Sockelmutter und Griffmutter axial an den Sicherungssegmenten abstützen.

Bei typischen Ausführungsformen ist der Sockelflansch als Kraftsensor ausgeführt, wobei der Kraftsensor zur Messung von auf den Steuerknüppel wirkenden Kräften in Richtung mindestens zweier Achsen eingerichtet ist. Typischerweise umfassen die mindestens zwei Achsen eine Roll-Achse oder eine Pitch-Achse, insbesondere eine Roll-Achse und eine Pitch-Achse. Insbesondere ist der Kraftsensor dazu eingerichtet, Kräfte, insbesondere Kraftkomponenten oder Biegemomente, in Richtungen senkrecht zu der Hochachse zu messen.

Typischerweise weist der Sockelflansch, insbesondere der Kraftsensor, einen verjüngten Bereich auf, insbesondere einen im Querschnitt in Richtung oder entlang der Hochachse verjüngten Bereich. Typischerweise weist der Kraftsensor in dem verjüngten Bereich des Kraftsensors Sensoren, insbesondere Dehnmessstreifen, zur Messung von Kräften auf den Steuerknüppel auf. Beispielsweise umfasst die rohrförmige Aufnahme den verjüngten Bereich, insbesondere in einem an die Sockelbasis angrenzenden axialen Bereich. Die Sensoren können eingerichtet sein zur Bestimmung von auf den Steuerknüppel ausgeübten Kräften, insbesondere zur Bestimmung von Dehnungen oder Spannungen. Beispielsweise können die Sensoren eingerichtet sein, Kräfte oder Kraftkomponenten in Richtung der Pitch-Achse oder der Roll-Achse zu bestimmen. Die Sensoren können beispielsweise je Achse redundant, insbesondere mindestens zweifach, vorgesehen sein. Bei typischen Ausführungsformen sind die Sensoren des Kraftsensors durch eine Sensorabdeckung des Sockelsystems abgedeckt. Die Sensorabdeckung kann beispielsweise an der Sockelbasis befestigt sein.

Typische Ausführungsformen einer Vorrichtung zur Steuerung eines Flugzeugs umfassen eine Antriebsvorrichtung und ein Sockelsystem nach hierin beschriebenen Ausführungsformen. Typischerweise ist die Vorrichtung derart eingerichtet, dass der Steuerknüppel bewegbar ist. Insbesondere ist der Steuerknüppel um mindestens eine Achse bewegbar, beispielsweise um eine Roll-Achse oder eine Pitch-Achse, optional um eine Yaw-Achse. Insbesondere sind Achsen orthogonal zueinander ausgerichtet. Die Antriebsvorrichtung ist typischerweise eingerichtet, den Steuerknüppel zu bewegen oder eine Antriebskraft der Antriebsvorrichtung auf den Steuerknüppel auszuüben. Bei Ausführungsformen ist die Antriebsvorrichtung als aktives System ausgeführt, beispielsweise als aktives System eines aktiven Side Sticks. Typischerweise weist die Antriebsvorrichtung mindestens einen Antrieb auf, insbesondere zwei oder drei Antriebe, beispielsweise einen ersten Antrieb und einen zweiten Antrieb. Typischerweise umfasst der mindestens eine Antrieb einen Elektroantrieb mit einem Elektromotor. Der mindestens eine Antrieb kann ein Getriebe umfassen. Ein aktives System bestimmt insbesondere die Position oder die Ausrichtung des Steuerknüppels, beispielsweise mittels Lagesensoren. Ein aktives System kann beispielsweise eingerichtet sein, eine elektronisch geregelte Kraftrückkopplung bereitzustellen. Zum Beispiel kann die Kraftrückkopplung einem Piloten eine Rückmeldung geben über die in einer bestimmten Steuerrichtung zur Verfügung stehenden Steuerreserven, insbesondere bis zum Erreichen einer Steuergrenze.

Bei weiteren typischen Ausführungsformen ist die Antriebsvorrichtung als passives System ausgeführt, wobei eine Antriebskraft der Antriebsvorrichtung beispielsweise durch mindestens eine Feder bereitgestellt wird.

Bei weiteren typischen Ausführungsformen kann eine Vorrichtung zur Steuerung eines Flugzeugs als starres System ausgeführt sein, insbesondere ohne eine Antriebsvorrichtung. Beispielsweise kann das Sockelsystem an einer unbeweglichen Sockelplattform, beispielsweise einer Sockelplattform eines Flugzeug-Cockpits oder eines Flugsimulators, befestigt sein, wobei insbesondere die auf den Steuerknüppel ausgeübten Kräfte durch einen Kraftsensor des Sockelsystems gemessen werden.

Bei typischen Ausführungsformen der Vorrichtung ist der Sockelflansch des Sockelsystems an der Antriebsvorrichtung befestigt, beispielsweise mit der Antriebsvorrichtung verschraubt. Insbesondere kann der Sockelflansch durch Basisöffnungen der Sockelbasis mit der Antriebsvorrichtung verschraubt sein.

Typische Ausführungsformen der Vorrichtung umfassen einen Steuerknüppel, der mit dem Sockelsystem verbunden ist. Insbesondere ist eine Steuerknüppel-Schnittstelle, beispielsweise ein Steuerknüppel-Außengewinde, mit einer Griff-Schnittstelle der Griffmutter verbunden, beispielsweise mit einem Griff-Innengewinde verschraubt. Elektrische Kontakte des Griffsteckers können weitere elektrische Kontakte eines Steuerknüppel-Steckers des Steuerknüppels kontaktieren. Eine Griffausrichtungsnase der Griffadapterplatte kann beispielsweise in eine Steuerknüppel-Aussparung des Steuerknüppels eingreifen und eine Ausrichtung des Steuerknüppels festlegen.

Das erfindungsgemäße Verfahren zum Herstellen eines Sockelsystems nach hierin beschriebenen Ausführungsformen umfasst ein Aufschieben einer Sockelmutter über eine rohrförmige Aufnahme eines Sockelflanschs. Insbesondere wird die Sockelmutter in Richtung einer Sockelbasis des Sockelflanschs aufgeschoben. Die Sockelmutter wird typischerweise so aufgeschoben, dass die Sockelmutter die rohrförmige Aufnahme zumindest teilweise umgreift.

Das erfindungsgemäße Verfahren umfasst ein Sichern der Sockelmutter an dem Sockelflansch.

Typischerweise wird die Sockelmutter in axialer Richtung, insbesondere in Richtung des Steuerknüppels gesichert. Beispielsweise wird die Sockelmutter axial gegen ein Abrutschen von der rohrförmigen Aufnahme gesichert. Typischerweise umfasst das Sichern ein Einlegen von Sicherungssegmenten in eine Nut des Sockelflansches. Insbesondere kann durch das Einlegen der Sicherungssegmente ein Anschlag für die Sockelmutter in Richtung des Steuerknüppels ausgebildet werden.

Typische Verfahren umfassen ein Einstecken eines Griffsteckers in die rohrförmige Aufnahme des Sockelflanschs. Typische Verfahren umfassen ein Anordnen einer Griffadapterplatte an dem Sockelflansch. Insbesondere wird die Griffadapterplatte so angeordnet, dass die Griffadapterplatte durch mindestens einen Sockel-Vorsprung des Sockelflanschs gegen ein Verdrehen gegenüber dem Sockelflansch gesichert ist. Typische Ausführungsformen umfassen ein Befestigen einer Griffmutter an der Sockelmutter, beispielsweise durch Verbinden einer Schnittstelle der Sockelmutter mit einer Befestigungs-Schnittstelle der Griffmutter. Insbesondere kann das Befestigen durch Anschrauben eines Befestigungs-Innengewindes der Griffmutter an ein Außengewinde der Sockelmutter erfolgen, wobei insbesondere die Griffmutter und die Sockelmutter mit definiertem Drehmoment verschraubt werden. Die Sockelmutter und die Griffmutter können mit Sicherungsdraht gesichert werden.

Typische Ausführungsformen können gegenüber dem Stand der Technik den Vorteil bieten, dass eine Kompatibilität zwischen Sockel und Steuerknüppel verbessert ist. Insbesondere kann das Sockelsystem den Vorteil bieten, dass zumindest ein Teil des Sockelsystems für verschiedene Typen von am Markt verfügbaren Steuerknüppeln verwendet werden kann. Zum Beispiel kann das Sockelsystem durch Anpassung der Griffadapterplatte oder der Griffmutter zur Verwendung mit einem Typ von Steuerknüppel angepasst werden. Ausführungsformen können den Vorteil bieten, dass das Sockelsystem angepasst werden kann, beispielsweise an ein Flugzeug-Cockpit. Beispielsweise kann eine Ausrichtung des Steuerknüppels, insbesondere eine Ausrichtung um die Hochachse, angepasst werden. Bei Flugzeugen mit Steuerknüppeln, insbesondere mit einem Side Stick, kann durch hierin beschriebene Ausführungsformen zum Beispiel die Ergonomie verbessert werden.

### Kurze Beschreibung der Zeichnungen

Weitere Vorteile und Merkmale bevorzugter Ausführungsformen der Erfindung werden nachfolgend anhand der beiliegenden Zeichnungen erläutert, wobei die Figuren zeigen:
- Fig. 1: eine schematische Schnittansicht eines erfindungsgemäßen Sockelsystems;
- Fig. 2: eine schematische Schnittansicht einer weiteren Ausführungsform eines erfindungsgemäßen Sockelsystems;
- Fig. 3: eine schematische Schnittansicht eines erfindungsgemäßen Sockelsystems und eines Steuerknüppels;
- Fig. 4: eine schematische Ansicht einer Vorrichtung zur Steuerung eines Flugzeugs; und
- Fig. 5: eine schematische Darstellung eines erfindungsgemäßen Verfahrens zum Herstellen eines Sockelsystems.

### Beschreibung von Ausführungsformen

Nachfolgend werden typische Ausführungsformen anhand der Figuren beschrieben, wobei die Erfindung nicht auf die Ausführungsbeispiele beschränkt ist, vielmehr wird der Umfang der Erfindung durch die Ansprüche bestimmt.

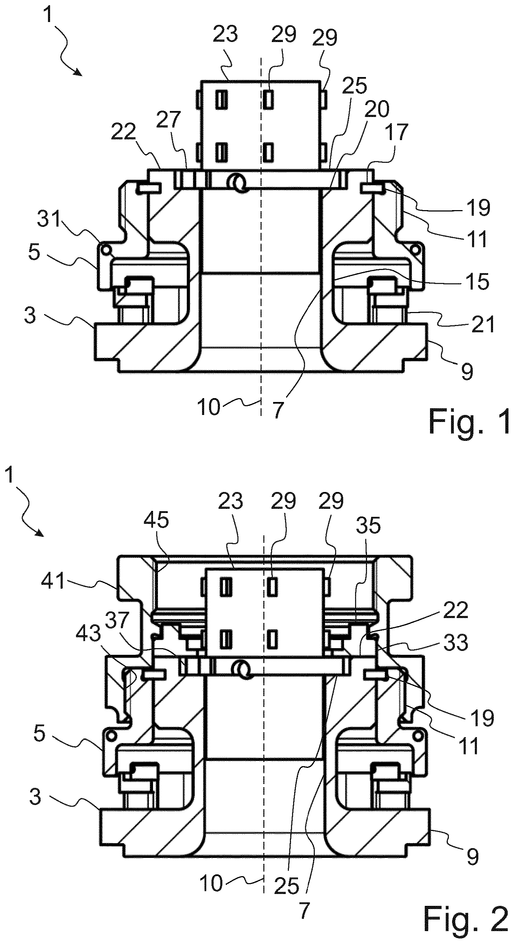

Bei der Beschreibung der Figuren werden die gleichen Bezugszeichen für gleiche oder ähnliche Teile verwendet. Teilweise werden Merkmale, welche bereits im Zusammenhang mit anderen Figuren beschrieben wurden, der Übersichtlichkeit halber nicht nochmals beschrieben. In den Figuren sind teilweise der Übersichtlichkeit mehrfach dargestellte Merkmale nicht jeweils mit einem Bezugszeichen versehen, beispielsweise die elektrischen Kontakte (Bezugszeichen 29 in Fig. 1).

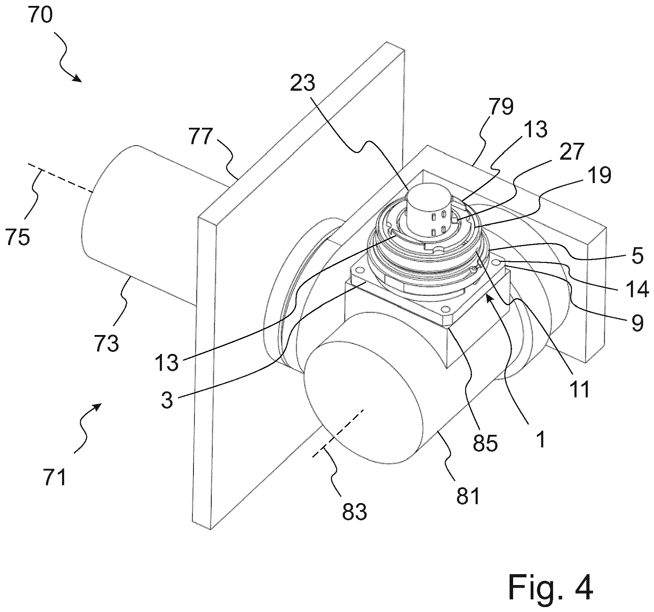

Fig. 1 zeigt eine schematische Schnittansicht eines erfindungsgemäßen Sockelsystems 1. Das Sockelsystem 1 umfasst einen Sockelflansch 3 mit einer Sockelbasis 9 und einer rohrförmigen Aufnahme 7. Der Sockelflansch 3, sowie die rohrförmige Aufnahme 7 des Sockelflansches 3, erstrecken sich entlang einer Hochachse 10 des Sockelsystems 1. Die rohrförmige Aufnahme 7 umfasst einen verjüngten Bereich 15, welcher axial in einem an die Sockelbasis 9 angrenzenden Bereich der rohrförmigen Aufnahme 7 angeordnet ist. Der Sockelflansch 3 weist axial in Richtung des Steuerknüppels Sockel-Vorsprünge (in Fig. 1 verdeckt, siehe beispielsweise Sockel-Vorsprünge 13 in Fig. 4) zur Verdrehsicherung einer Griffadapterplatte auf.

Der Sockelflansch 3 ist in der Fig. 1 als Kraftsensor ausgebildet. In dem verjüngten Bereich 15 des Sockelflansches 3 sind Sensoren (nicht dargestellt), in der Ausführungsform der Fig. 1 Dehnmessstreifen, angeordnet. Die Sensoren sind eingerichtet zum Bestimmen von Kräften, welche auf einen an dem Sockelsystem 1 befestigten Steuerknüppel ausgeübt werden, beispielsweise durch eine Hand eines Piloten während des Steuerns eines Flugzeuges. Insbesondere bestimmen die Sensoren Kräfte in Richtung einer Roll-Achse und einer Pitch-Achse, welche orthogonal zu der Hochachse 10 und orthogonal zueinander ausgerichtet sind. Die Sensoren sind durch eine Sensorabdeckung 21 abgedeckt und nach außen hin geschützt.

Das Sockelsystem 1 umfasst eine Sockelmutter 5, welche die rohrförmige Aufnahme 7 in Umfangsrichtung um die Hochachse 10 umgreift. Die Sockelmutter 5 weist radial außen eine Schnittstelle 11 auf, welche eingerichtet ist zur Verbindung mit einer Griffmutter. In der Fig. 1 ist die Schnittstelle 11 als Außengewinde der Sockelmutter 5 ausgeführt. Die Sockelmutter 5 weist eine Befestigungsöffnung 31 zur Befestigung eines Sicherungsdrahtes auf.

Die Sockelmutter 5 ist in der Fig. 1 durch Sicherungssegmente 19 gegen ein Abrutschen von der rohrförmigen Aufnahme 7 gesichert. Die Sicherungssegmente 19 sind teilweise in einer Nut 17 des Sockelflansches 3 aufgenommen. Die Nut 17 ist in der Fig. 1 beispielsweise als Ringnut in Umfangsrichtung um die rohrförmige Aufnahme 7 ausgeführt.

In der Fig. 1 ist ein Griffstecker 23 des Sockelsystems 1 teilweise in der rohrförmigen Aufnahme 7 des Sockelflansches 3 aufgenommen. Der Griffstecker 23 weist einen radial auskragenden Steckerflansch 25 auf. Der Steckerflansch 25 liegt axial auf einer ersten axialen Sockelflansch-Stirnfläche 20 des Sockelflansches 3 auf. Die erste axiale Sockelflansch-Stirnfläche 20 bildet in radialer Richtung mit einer zweiten axialen Sockelflansch-Stirnfläche 22 eine Stufe aus. Der Steckerflansch 25 ist axial in Richtung des Steuerknüppels bündig mit der zweiten axialen Sockelflansch-Stirnfläche 22 ausgeführt. Der Steckerflansch 25 weist ein Stecker-Verdrehsicherungselement 27, zur Verdrehsicherung des Steckerflansches 25 gegenüber einer Griffadapterplatte auf. In der Fig. 1 ist das Stecker-Verdrehsicherungselement 27 als axiale Vertiefung des Steckerflansches 25 in Richtung der Sockelbasis 9 ausgeführt. Der Griffstecker 23 weist elektrische Kontakte 29 zur Kontaktierung von weiteren elektrischen Kontakten eines Steuerknüppels auf.

Fig. 2 zeigt eine schematische Schnittansicht eines Sockelsystems 1, wobei das Sockelsystem 1 der Fig. 2 insbesondere eine Griffadapterplatte 33 und eine Griffmutter 41 umfasst. Die Griffadapterplatte 33 ist ringförmig ausgeführt und umgreift in

Umfangsrichtung um die Hochachse 10 den Griffstecker 23. Die Griffadapterplatte 33 liegt axial in Richtung der Sockelbasis 9 teilweise auf dem Steckerflansch 25 des Griffsteckers 23 und teilweise auf der zweiten axialen Sockelflansch-Stirnfläche 22 auf. Die Griffadapterplatte 33 weist ein Adapter-Verdrehsicherungselement 37 auf, welches zusammen mit dem Stecker-Verdrehsicherungselement 27 ein Verdrehen des Griffsteckers 23 gegenüber der Griffadapterplatte 33 verhindert. In der Fig. 2 ist das Adapter-Verdrehsicherungselement 37 als Nase ausgeführt, welche in axialer Richtung in das als axiale Vertiefung ausgeführte Stecker-Verdrehsicherungselement 27 in dem Steckerflansch 25 eingreift.

Die Griffadapterplatte 33 umfasst axial in Richtung des Steuerknüppels Griffausrichtungsnasen 35 zur Verdrehsicherung des Steuerknüppels gegenüber der Griffadapterplatte 33. Die Griffadapterplatte 33 weist zur Verdrehsicherung der Griffadapterplatte 33 gegenüber dem Sockelflansch 23 Ausnehmungen auf, welche passend zu den Sockel-Vorsprüngen des Sockelflanschs 3 ausgeführt sind.

Durch eine Anordnung von Verdrehsicherungen der Griffadapterplatte in Umfangsrichtung um die Hochachse, insbesondere der mindestens einen Griffausrichtungsnase, des mindestens einen Adapter-Verdrehsicherungselements oder der mindestens einen Ausnehmung, kann beispielsweise eine Ausrichtung des Steuerknüppels um die Hochachse eingestellt werden. Insbesondere kann durch die Anordnung der mindestens einen Ausnehmung die Ausrichtung der Griffadapterplatte um die Hochachse gegenüber dem Sockelflansch festgelegt werden. Durch die Anordnung der mindestens einen Griffausrichtungsnase kann beispielsweise die Ausrichtung des Steuerknüppels gegenüber der Griffadapterplatte vorgegeben werden. Durch die Anordnung des mindestens einen Adapter-Verdrehsicherungselements kann insbesondere eine Ausrichtung des Griffsteckers um die Hochachse, insbesondere der elektrischen Kontakte des Griffsteckers, gegenüber der Griffadapterplatte festgelegt werden. Beispielsweise kann die Griffadapterplatte, insbesondere die Verdrehsicherungen der Griffadapterplatte, derart eingerichtet sein, dass die Ausrichtung um die Hochachse der elektrischen Kontakte des Griffsteckers auf die Ausrichtung des Steuerknüppels um die Hochachse abgestimmt wird. Hierin ist ein Festlegen oder Vorgeben einer Ausrichtung um die Hochachse insbesondere nicht absolut zu verstehen, sondern beispielsweise relativ zu der Griffadapterplatte oder zu dem Sockelflansch. Bei Ausführungsformen kann der Steuerknüppel zusammen mit dem Sockelflansch um die Hochachse drehbar ausgeführt sein.

Das Sockelsystem 1 umfasst in Fig. 2 eine Griffmutter 41. Die Griffmutter 41 weist eine Befestigungs-Schnittstelle 43, in Fig. 2 ein Befestigungs-Innengewinde, zur Verbindung mit der Schnittstelle 11 der Sockelmutter 5 auf. Beispielsweise ist in der Fig. 2 das Befestigungs-Innengewinde der Griffmutter 41 mit dem Außengewinde der Sockelmutter 5 verschraubt. Das Befestigungs-Innengewinde ist beispielsweise als Linksgewinde ausgeführt. Die Griffmutter 41 und die Sockelmutter 5 sind gemeinsam um die Hochachse 10 drehbar an dem Sockelflansch 3 und den Sicherungssegmenten 19 gelagert.

Die Griffmutter 41 weist in Fig. 2 ein Griff-Innengewinde 45 zur Verbindung der Griffmutter 41 mit einem Steuerknüppel auf. Das Griff-Innengewinde 45 ist bezüglich der Befestigungs-Schnittstelle 43 axial in Richtung des Steuerknüppels angeordnet. Das Griff-Innengewinde 45 ist eingerichtet zum Verschrauben mit einem Steuerknüppel-Außengewinde des Steuerknüppels. Das Griff-Innengewinde 45 ist beispielsweise als Rechtsgewinde ausgeführt.

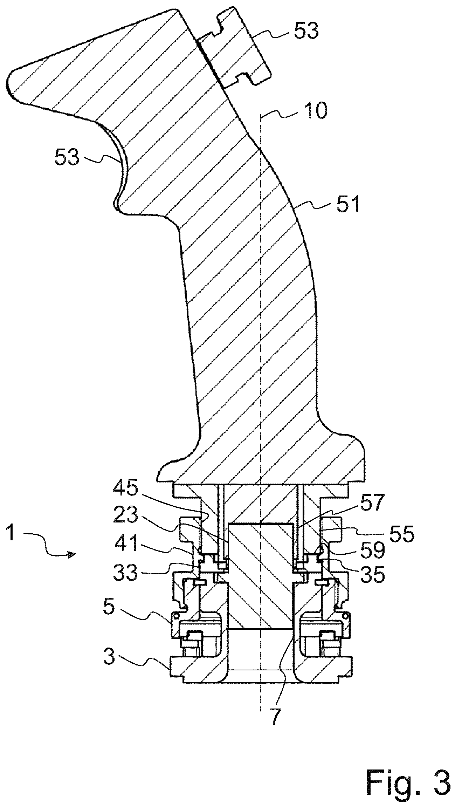

Fig. 3 zeigt eine Schnittansicht eines Sockelsystems 1 mit einem an dem Sockelsystem 1 befestigten Steuerknüppel 51. Der Steuerknüppel 51 weist ein Steuerknüppel-Außengewinde 55 auf, welches mit dem Griff-Innengewinde 45 der Griffmutter 41 verschraubt ist. Der Steuerknüppel 51 umfasst einen Steuerknüppel-Stecker 57 mit weiteren elektrischen Kontakten. Die weiteren elektrischen Kontakte sind mit weiteren Steuerungselementen 53, in der Fig. 3 mit einem Steuerschalter und einem Abzug, verbunden. Der Steuerknüppel-Stecker 57 umgreift den Griffstecker 23 des Sockelsystems 1, wobei die weiteren elektrischen Kontakte des Steuerknüppels 51 die elektrischen Kontakte 29 des Griffsteckers 23 kontaktieren.

Zur Steuerung eines Flugzeugs kann beispielsweise durch einen Piloten eine Kraft auf den Steuerknüppel 51 insbesondere in einer Richtung senkrecht zu der Hochachse 10, beispielsweise um die Pitch-Achse oder die Roll-Achse, ausgeübt werden. Die Kraft kann durch das Sockelsystem 1 auf den Sockelflansch 3 übertragen werden. Insbesondere kann die Kraft als Spannung oder Dehnung durch Sensoren, beispielsweise Dehnmessstreifen, in dem verjüngten Bereich 15 der rohrförmigen Aufnahme 7 bestimmt und zur Steuerung verwendet werden.

Fig. 4 zeigt eine schematische Ansicht einer Vorrichtung 70 zur Steuerung eines Flugzeugs. Die Vorrichtung 70 umfasst eine Antriebsvorrichtung 71. Die Antriebsvorrichtung 71 ist eingerichtet, eine elektronisch geregelte Kraftrückkopplung bereitzustellen zur Steuerung eines Flugzeugs durch einen Piloten. Die Antriebsvorrichtung 71 umfasst einen ersten Antrieb 73. Ein erster Stator des ersten Antriebs 73 ist beispielsweise starr mit einem Gehäuse 77 verbunden. Eine erste Welle des ersten Antriebs 73 ist um die erste Achse 75 rotierbar. An der ersten Welle ist ein Führungselement 79 der Antriebsvorrichtung 71 angeordnet, welches mit der ersten Welle um die erste Achse 75 rotiert. An dem Führungselement 79 ist ein zweiter Antrieb 81 der Antriebsvorrichtung 71 angeordnet. Der zweite Antrieb 81 bewegt sich mit dem Führungselement 79. Ein zweiter Stator des zweiten Antriebs 81 und eine zweite Welle des zweiten Antriebs 81 sind relativ zueinander um eine zweite Achse 83 rotierbar. Der zweite Antrieb 81 weist eine Plattform 85 zur Befestigung eines Sockelsystems 1 auf. In der Fig. 4 ist die Plattform 85 starr mit dem zweiten Stator verbunden. Die zweite Welle ist starr mit dem Führungselement 79 verbunden. In weiteren Ausführungsformen kann beispielsweise die zweite Welle starr mit der Plattform verbunden sein und der zweite Stator starr mit dem Führungselement verbunden sein.

In Fig. 4 umfasst das Sockelsystem 1 einen Sockelflansch 3, eine Sockelmutter 5, Sicherungssegmente 19 und einen Griffstecker 23. Die Sockelbasis 9 des Sockelflanschs 3 weist Basisöffnungen 14 auf. Die Sockelbasis 9 ist durch die Basisöffnungen 14 mit der Plattform 85 der Antriebsvorrichtung 71 verschraubt. Der Sockelflansch 3 umfasst axial in Richtung des Steuerknüppels, beispielsweise an einer axialen Sockelflansch-Stirnfläche 22, Sockel-Vorsprünge 13 zur Verdrehsicherung einer Griffadapterplatte gegenüber dem Sockelflansch 3.

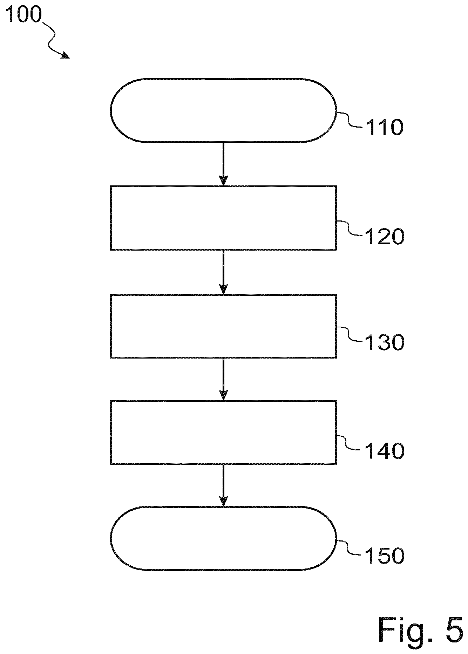

Fig. 5 zeigt schematisch eine erfindungsgemäße Ausführungsform eines Verfahrens 100 zum Herstellen eines Sockelsystems. Das Verfahren 100 umfasst bei 110 ein Aufschieben einer Sockelmutter über eine rohrförmige Aufnahme eines Sockelflanschs in Richtung einer Sockelbasis des Sockelflansches.

Bei 120 erfolgt ein Sichern der Sockelmutter an dem Sockelflansch. Das Sichern umfasst ein Einlegen von Sicherungssegmenten in eine Nut des Sockelflanschs zum Ausbilden eines Anschlags für die Sockelmutter in Richtung des Steuerknüppels.

Das Verfahren 100 umfasst bei 130 ein Einstecken eines Griffsteckers in die rohrförmige Aufnahme des Sockelflanschs. Bei 140 erfolgt ein Anordnen einer Griffadapterplatte an dem Sockelflansch, wobei die Griffadapterplatte spezifisch für einen Steuerknüppel und spezifisch für die Ausrichtung des Steuerknüppels hergestellt ist. Das Anordnen umfasst ein Eingreifen von Sockel-Vorsprüngen des Sockelflanschs in Ausnehmungen der Griffadapterplatte. Das Anordnen umfasst ein Eingreifen eines Adapter-Drehversicherungselements der Griffadapterplatte mit einem Stecker-Drehversicherungselement des Griffsteckers.

Bei 150 umfasst das Verfahren 100 ein Befestigen einer Griffmutter, welche spezifisch für den Steuerknüppel hergestellt ist, an der Sockelmutter durch Anschrauben eines Befestigungs-Innengewindes der Griffmutter an ein Außengewinde der Sockelmutter mit einem definierten Drehmoment.

## Patentansprüche

1. Sockelsystem (1) für einen Steuerknüppel (51) zur Steuerung eines Flugzeugs, mit
- einem Sockelflansch (3) umfassend eine Sockelbasis (9) und eine rohrförmige Aufnahme (7), wobei sich die rohrförmige Aufnahme (7) entlang einer Hochachse (10) des Sockelsystems (1) erstreckt und zur Aufnahme eines Griffsteckers (23) eingerichtet ist, welcher elektrische Kontakte (29) zur Kontaktierung weiterer elektrischer Kontakte des Steuerknüppels (51) aufweist, und
**dadurch gekennzeichnet, dass** das Sockelsystem eine Sockelmutter (5) umfasst, welche die rohrförmige Aufnahme (7) des Sockelflanschs (3) zumindest teilweise umschließt,
- wobei die Sockelmutter (5) eine Schnittstelle (11) zur Befestigung einer Griffmutter (41) umfasst, wobei die Griffmutter (41) eine Griff-Schnittstelle zur Befestigung des Steuerknüppels (51) an der Griffmutter (41) umfasst.

2. Sockelsystem (1) nach Anspruch 1, wobei der Sockelflansch (3) in Richtung des Steuerknüppels (51) mindestens einen Sockel-Vorsprung (13) zur Verdrehsicherung einer zwischen dem Sockelflansch (3) und dem Steuerknüppel (51) anzuordnenden Griffadapterplatte (33) umfasst.

3. Sockelsystem (1) nach einem der vorhergehenden Ansprüche, wobei die Schnittstelle (11) der Sockelmutter (5) als ein Außengewinde der Sockelmutter (5) ausgeführt ist.

4. Sockelsystem (1) nach einem der vorhergehenden Ansprüche, wobei die Sockelmutter (5) drehbar um die rohrförmige Aufnahme (7) des Sockelflanschs (3) an dem Sockelflansch (3) gelagert ist.

5. Sockelsystem (1) nach einem der vorhergehenden Ansprüche, wobei die rohrförmige Aufnahme (7) des Sockelflanschs (3) in Umfangsrichtung eine Nut (17) aufweist, und wobei Sicherungssegmente (19) des Sockelsystems (1) teilweise in der Nut (17) angeordnet sind und für die Sockelmutter (5) einen Anschlag in Richtung des Steuerknüppels (51) bilden.

6. Sockelsystem (1) nach Anspruch 2, umfassend den Griffstecker (23), welcher zumindest teilweise in der rohrförmigen Aufnahme (7) des Sockelflanschs (3) aufgenommen ist und einen radial auskragenden Steckerflansch (25) aufweist, wobei der Steckerflansch (25) an der dem Steuerknüppel (51) zugewandten Seite des Steckerflansches (25) mindestens ein Stecker-Verdrehsicherungselement (27) zur Verdrehsicherung des Griffsteckers (23) gegenüber der Griffadapterplatte (33) aufweist.

7. Sockelsystem (1) nach einem der Ansprüche 2 oder 6, umfassend die Griffadapterplatte (33), welche zur Anordnung zwischen dem Sockelflansch (3) und dem Steuerknüppel (51) eingerichtet ist, wobei die Griffadapterplatte (33) an einer dem Steuerknüppel (51) zugewandten, ersten Adapterseite der Griffadapterplatte (33) mindestens eine Griffausrichtungsnase (35) zur Verdrehsicherung des Steuerknüppels (51) gegenüber der Griffadapterplatte (33) und dem Sockelflansch (3) umfasst.

8. Sockelsystem (1) nach Anspruch 7, wobei die Griffadapterplatte (33) an einer dem Sockelflansch (3) zugewandten, zweiten Adapterseite der Griffadapterplatte (33) mindestens ein Adapter-Verdrehsicherungselement (37) zur Verdrehsicherung des Griffsteckers (23) gegenüber dem Sockelflansch (3) umfasst.

9. Sockelsystem (1) nach einem der vorhergehenden Ansprüche, umfassend die Griffmutter (41) mit einer Befestigungs-Schnittstelle (43) zur Befestigung der Griffmutter (41) an der Sockelmutter (5).

10. Sockelsystem (1) nach Anspruch 9, wobei die Befestigungs-Schnittstelle (43) der Griffmutter (41) als Befestigungs-Innengewinde ausgeführt ist.

11. Sockelsystem (1) nach einem der Ansprüche 9 und 10, wobei die Griffmutter (41) ein Griff-Innengewinde (45) zur Befestigung des Steuerknüppels (51) an der Griffmutter (41) umfasst.

12. Sockelsystem (1) nach einem der Ansprüche 9 bis 11, wobei die Schnittstelle (11) der Sockelmutter (5) mit der Befestigungs-Schnittstelle (43) der Griffmutter (41) verbunden ist; und wobei die Griffmutter (41) und die Sockelmutter (5) gemeinsam drehbar um die rohrförmige Aufnahme (7) des Sockelflanschs (3) gelagert sind.

13. Sockelsystem (1) nach einem der vorhergehenden Ansprüche, wobei der Sockelflansch (3) als Kraftsensor ausgeführt ist, und wobei der Kraftsensor zur Messung von auf den Steuerknüppel (51) wirkenden Kräften in Richtung mindestens zweier Achsen eingerichtet ist.

14. Sockelsystem (1) nach Anspruch 13, wobei der Kraftsensor in einem verjüngten Bereich (15) des Kraftsensors Sensoren, insbesondere Dehnmessstreifen, zur Messung von Kräften auf den Steuerknüppel (51) aufweist.

15. Vorrichtung (70) zur Steuerung eines Flugzeugs, umfassend
- eine Antriebsvorrichtung (71); und
- ein Sockelsystem (1) nach einem der vorhergehenden Ansprüche, wobei der Sockelflansch (3) des Sockelsystems (1) an der Antriebsvorrichtung (71) befestigt ist.

16. Verfahren (100) zum Herstellen eines Sockelsystems (1) für einen Steuerknüppel (51) zur Steuerung eines Flugzeugs nach einem der Ansprüche 1 bis 14, mit
- Aufschieben (110) einer Sockelmutter (5) über eine rohrförmige Aufnahme (7) eines Sockelflanschs (3); und
- Sichern (120) der Sockelmutter (5) an dem Sockelflansch (3).

## Claims

1. Base system (1) for a joystick (51) for controlling an aircraft, having
- a base flange (3) comprising a base bottom (9) and a tubular receptacle (7), wherein the tubular receptacle (7) extends along a vertical axis (10) of the base system (1) and is designed to receive a handle plug (23) which has electrical contacts (29) for contacting further electrical contacts of the joystick (51), and
**characterized in that** the base system comprises a base nut (5) which at least partially encloses the tubular receptacle (7) of the base flange (3),
- wherein the base nut (5) comprises an interface (11) for fastening a handle nut (41), wherein the handle nut (41) comprises a handle interface for fastening the joystick (51) to the handle nut (41).

2. Base system (1) according to claim 1, wherein the base flange (3) comprises at least one base projection (13) in the direction of the joystick (51) for preventing a handle adapter plate (33) which is to be arranged between the base flange (3) and the joystick (51) from rotating.

3. Base system (1) according to either one of the preceding claims, wherein the interface (11) of the base nut (5) is designed as an external thread of the base nut (5).

4. Base system (1) according to any one of the preceding claims, wherein the base nut (5) is mounted on the base flange (3) so as to be rotatable about the tubular receptacle (7) of the base flange (3).

5. Base system (1) according to any one of the preceding claims, wherein the tubular receptacle (7) of the base flange (3) has a groove (17) in the circumferential direction, and wherein securing segments (19) of the base system (1) are partially arranged in the groove (17) and form a stop for the base nut (5) in the direction of the joystick (51).

6. Base system (1) according to claim 2, comprising the handle plug (23) which is at least partially received in the tubular receptacle (7) of the base flange (3) and has a radially projecting plug flange (25), wherein the plug flange (25) has at least one plug anti-rotation element (27) on the side of the plug flange (25) facing the joystick (51) for preventing the handle plug (23) from rotating relative to the handle adapter plate (33).

7. Base system (1) according to either one of claims 2 or 6, comprising the handle adapter plate (33) which is designed to be arranged between the base flange (3) and the joystick (51), wherein the handle adapter plate (33) comprises at least one handle alignment lug (35) on a first adapter side of the handle adapter plate (33) facing the joystick (51) for preventing the joystick (51) from rotating relative to the handle adapter plate (33) and the base flange (3).

8. Base system (1) according to claim 7, wherein the handle adapter plate (33) comprises at least one adapter anti-rotation element (37) on a second adapter side of the handle adapter plate (33) facing the base flange (3) for preventing the handle plug (23) from rotating relative to the base flange (3).

9. Base system (1) according to any one of the preceding claims, comprising the handle nut (41) having a fastening interface (43) for fastening the handle nut (41) to the base nut (5).

10. Base system (1) according to claim 9, wherein the fastening interface (43) of the handle nut (41) is designed as an internal fastening thread.

11. Base system (1) according to either one of claims 9 and 10, wherein the handle nut (41) comprises an internal handle thread (45) for fastening the joystick (51) to the handle nut (41).

12. Base system (1) according to any one of claims 9 to 11, wherein the interface (11) of the base nut (5) is connected to the fastening interface (43) of the handle nut (41); and wherein the handle nut (41) and the base nut (5) are mounted so as to be jointly rotatable about the tubular receptacle (7) of the base flange (3).

13. Base system (1) according to any one of the preceding claims, wherein the base flange (3) is designed as a force sensor, and wherein the force sensor is designed to measure forces acting on the joystick (51) in the direction of at least two axes.

14. Base system (1) according to claim 13, wherein the force sensor has sensors, in particular strain gauges, in a tapered region (15) of the force sensor for measuring forces on the joystick (51).

15. Device (70) for controlling an aircraft, comprising
- a drive device (71); and
- a base system (1) according to any one of the preceding claims, wherein the base flange (3) of the base system (1) is fastened to the drive device (71).

16. Method (100) for producing a base system (1) for a joystick (51) for controlling an aircraft according to any one of claims 1 to 14, comprising
- sliding (110) a base nut (5) over a tubular receptacle (7) of a base flange (3); and
- securing (120) the base nut (5) on the base flange (3).

## Revendications

1. Système formant socle (1) pour un levier de commande (51) permettant la commande d'un avion, comportant
- une bride de socle (3) comprenant une base de socle (9) et un logement tubulaire (7), dans lequel le logement tubulaire (7) s'étend le long d'un axe de giration (10) du système formant socle (1) et est conçu pour la réception d'une fiche de manche (23) qui présente des contacts électriques (29) pour la mise en contact d'autres contacts électriques du levier de commande (51), et
**caractérisé en ce que** le système formant socle comprend un écrou de socle (5) qui entoure au moins partiellement le logement tubulaire (7) de la bride de socle (3),
- dans lequel l'écrou de socle (5) comprend une jonction (11) pour la fixation d'un écrou de manche (41), dans lequel l'écrou de manche (41) comprend une jonction de manche pour la fixation du levier de commande (51) à l'écrou de manche (41).

2. Système formant socle (1) selon la revendication 1, dans lequel la bride de socle (3) comprend, en direction du levier de commande (51), au moins une saillie de socle (13) pour le blocage de rotation d'une plaque formant adaptateur de manche (33) à disposer entre la bride de socle (3) et le levier de commande (51).

3. Système formant socle (1) selon l'une des revendications précédentes, dans lequel la jonction (11) de l'écrou de socle (5) est mise en œuvre sous forme d'un filetage extérieur de l'écrou de socle (5).

4. Système formant socle (1) selon l'une des revendications précédentes, dans lequel l'écrou de socle (5) est monté rotatif autour du logement tubulaire (7) de la bride de socle (3) sur la bride de socle (3).

5. Système formant socle (1) selon l'une des revendications précédentes, dans lequel le logement tubulaire (7) de la bride de socle (3) présente une rainure (17) dans la direction circonférentielle, et dans lequel des segments de blocage (19) du système formant socle (1) sont partiellement disposés dans la rainure (17) et forment une butée pour l'écrou de socle (5) en direction du levier de commande (51).

6. Système formant socle (1) selon la revendication 2, comprenant la fiche de manche (23) qui est reçue au moins partiellement dans le logement tubulaire (7) de la bride de socle (3) et qui présente une bride de fiche (25) en saillie radiale, dans lequel la bride de fiche (25) présente, sur le côté de la bride de fiche (25) tourné vers le levier de commande (51), au moins un élément de blocage de rotation de fiche (27) pour le blocage de rotation de la fiche de manche (23) par rapport à la plaque formant adaptateur de manche (33).

7. Système formant socle (1) selon l'une des revendications 2 ou 6, comprenant la plaque formant adaptateur de manche (33) qui est conçue pour la disposition entre la bride de socle (3) et le levier de commande (51), dans lequel la plaque formant adaptateur de manche (33) comprend, sur un premier côté d'adaptateur de la plaque formant adaptateur de manche (33), lequel est tourné vers le levier de commande (51), au moins un nez d'orientation de manche (35) pour le blocage de rotation du levier de commande (51) par rapport à la plaque formant adaptateur de manche (33) et à la bride de socle (3).

8. Système formant socle (1) selon la revendication 7, dans lequel la plaque formant adaptateur de manche (33) comprend, sur un deuxième côté d'adaptateur de la plaque formant adaptateur de manche (33) tourné vers la bride de socle (3), au moins un élément de blocage de rotation d'adaptateur (37) pour le blocage de rotation de la fiche de manche (23) par rapport à la bride de socle (3).

9. Système formant socle (1) selon l'une des revendications précédentes, comprenant l'écrou de manche (41) comportant une jonction de fixation (43) pour la fixation de l'écrou de manche (41) à l'écrou de socle (5).

10. Système formant socle (1) selon la revendication 9, dans lequel la jonction de fixation (43) de l'écrou de manche (41) est mise en œuvre sous forme de filetage intérieur de fixation.

11. Système formant socle (1) selon l'une des revendications 9 et 10, dans lequel l'écrou de manche (41) comprend un filetage intérieur de manche (45) pour la fixation du levier de commande (51) sur l'écrou de manche (41).

12. Système formant socle (1) selon l'une des revendications 9 à 11, dans lequel la jonction (11) de l'écrou de socle (5) est reliée à la jonction de fixation (43) de l'écrou de manche (41) ; et dans lequel l'écrou de manche (41) et l'écrou de socle (5) sont conjointement montés rotatifs autour du logement tubulaire (7) de la bride de socle (3).

13. Système formant socle (1) selon l'une des revendications précédentes, dans lequel la bride de socle (3) est mise en œuvre sous forme de capteur de force, et dans lequel le capteur de force est configuré pour mesurer des forces agissant sur le levier de commande (51) en direction d'au moins deux axes.

14. Système formant socle (1) selon la revendication 13, dans lequel le capteur de force présente, dans une zone rétrécie (15) du capteur de force, des capteurs, en particulier des jauges de contrainte, pour la mesure de forces sur le levier de commande (51).

15. Dispositif (70) pour la commande d'un avion, comprenant
- un dispositif d'entraînement (71) ; et
- un système formant socle (1) selon l'une des revendications précédentes, dans lequel la bride de socle (3) du système formant socle (1) est fixée au dispositif d'entraînement (71).

16. Procédé (100) de fabrication d'un système formant socle (1) pour un levier de commande (51) pour la commande d'un avion selon l'une des revendications 1 à 14, comportant
- l'enfilage (110) d'un écrou de socle (5) sur un logement tubulaire (7) d'une bride de socle (3) ; et
- le blocage (120) de l'écrou de socle (5) sur la bride de socle (3).
